# EUROPEAN PATENT SPECIFICATION

(11) **EP 1 877 457 B1**
(45) Date of publication and mention of the grant of the patent: **12.08.2009**
(21) Application number: 06754802.4
(22) Date of filing: 24.04.2006
(51) Int. Cl.: C08F 283/06, C08F 293/00, C08G 65/22, C08L 71/02

(54) **METHOD OF PRODUCING COMB BLOCK-COPOLYMERS FROM EPOXY-FUNCTIONALIZED NITROXYLETHERS AND ANIONICALLY POLYMERIZABLE MONOMERS**
VERFAHREN ZUR HERSTELLUNG VON KAMMBLOCKCOPOLYMEREN AUS EPOXIDFUNKTIONALISIERTEN NITROXYLETHERN UND ANIONISCH POLYMERISIERBAREN MONOMEREN
METHODE DE PRODUCTION DE COPOLYMERES SEQUENCES EN PEIGNE A PARTIR DE NITROXYLETHERS FONCTIONNALISES PAR EPOXYDE ET DE MONOMERES POUVANT ETRE OBTENUS PAR POLYMERISATION ANIONIQUE

(30) Priority: 03.05.2005 EP 05103662
(43) Date of publication of application: 16.01.2008
(73) Proprietor: BASF SE, 67056 Ludwigshafen (DE)
(72) Inventor: FINK, Jochen, 69226 Nussloch (DE); PFAENDNER, Rudolf, 64668 Rimbach (DE)
(74) Representative: Zumstein, Angela
(86) International application number: PCT/EP2006/061774
(87) International publication number: WO 2006/117302

(56) References cited:
- WO-A-20/04022617
- WO-A-20/04069887
- US-A1- 2004 220 344

## Description

The instant invention pertains to a method of producing comb block copolymers from epoxy- functionalized nitroxylethers and further monomers by anionic polymerization followed by nitroxyl mediated controlled free radical polymerization. The block copolymer backbone has defined initiating points where radical grafting of ethylenically unsaturated monomers can take place. Further aspects of the invention are comb block copolymers obtained by this process and the use of such comb block polymers for plastic applications.

The synthesis of amphiphilic block- and graft copolymers containing both unpolar and polar chain species of different chemical nature has been approached by several techniques. A promising approach for the synthesis of aliphatic polyether backbones has been described, for example, by Heitz et al. in Macromol. Chem. 183, 1685 (1982).

One problem, especially in the design of graft copolymers, is the lack of grafting efficiency, especially if a radical "grafting to" process is chosen. Complete grafting of the graft monomer is seldom achieved and hence the final product is often contaminated with homopolymer formed in the grafting step. This process is mostly applied in the synthesis of high impact polystyrene, where styrene is grafted radically onto a polybutadiene latex. More efficient grafting is achieved when active sites within the polymeric backbone are used to covalently attach new polymer chains to the starting molecule. This requires, however, the presence of well-defined "initiation points" in the backbone.

Linear polyethers based on ethylene oxide and/or propylene oxide, besides their vast application in polyurethanes, find numerous applications in pharmaceutical and biomedical applications. Industrial applications include amongst numerous others flocculating agents in the treatment of industrial waste water, drag reduction and the modification of surface properties, such as the use as antistatic agents. Linear block copolymers of ethylene and propylene oxide also have commercial applications and serve as non-ionic tensides, emulsifiers and stability improvers (as for example "Pluronics®" manufactured by BASF). Statistical copolymers of this type are also accessible. Most of these products are liquids or waxes, depending on their final molecular weight. These copolymers are still water soluble with a minimum content of 25% ethylene oxide and hence pose an interesting class of materials for the synthesis of amphiphilic graft copolymers.

For example, WO 2004/022617 describes a method of anionically polymerizing in a first step a polymer backbone from epoxy group containing monomers wherein one monomer contains additionally a labile nitroxylether group and in a second step polymerizing under controlled free radical polymerization (CFRP) conditions a comb or star structure onto this backbone.

The present invention goes beyond this concept. It provides a method of anionically polymerizing in two steps a block copolymer backbone from epoxy group containing monomers and acrylates and in a third step polymerizing (grafting) under controlled free radical polymerization (CFRP) conditions a comb or star structure onto this back bone.

The instant process allows already introducing blocks of different polarity into the polymer backbone, thereby adapting it to different requirements. Since the grafting points are exclusively located on the polyether part of the block copolymer backbone, the length of the polyether-block determines the number of grafted side arms and the branching factor. Varying the block lengths is an additional means of adjusting the polymer properties. Furthermore composition of the monomers and overall molecular weight of the comb structure determine the polymer properties.

The resulting block-copolymer structures are of interest in surface modification applications of thermoplastic materials, insuring a permanent polar surface by anchoring the polar moiety via the less polar polymer chains in the matrix of the desired resin. Similarly, these polymers can be used as nonionic surfactants. The incorporation of the novel molecules into a backbone polymer containing epichlorohydrine can lead to rubber-thermoplastic comb copolymers. Furthermore these comb copolymers can be used as self-organizing, self assembling polymer systems, e. g. for separation processes.

One aspect of the invention is a method for the preparation of a comb block-copolymer comprising

### a1) anionically polymerizing in a first step a first block of one or more epoxy group containing monomers to obtain a polyether, wherein at least one monomer is of formula (I)

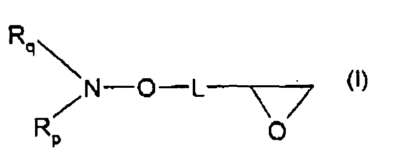

wherein L is a linking group selected from the group consisting of C₁-C₁₈alkylene, phenylene, phenylene-C₁-C₁₈alkylene, C₁-C₁₈alkylene-phenylene, C₁-C₁₈alkylene-phenyleneoxy and C₅-C₁₂cycloalkylene;
Rp and Rq are independently tertiary bound C₄-C₂₈alkyl groups which are unsubstituted or substitituted by one or more electron withdrawing groups or by phenyl; or
Rₚ and R_{q} together form a 5 or 6 membered heterocyclic ring which is substituted at least by 4 C₁-C₄alkyl groups and which may be interrupted by a further nitrogen or oxygen atom;

### a2) anionically polymerizing in a second step a second block wherein the monomer is a conjugated diene, styrene, substituted styrene, ketone or a compound of formula (la)

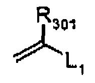

wherein R₃₀₁ is H or C₁-C₄alkyl, L₁ is CN, or -COOR₃₀₀ and R₃₀₀ is C₁-C₃₈ alkyl;
and in a third step

b) adding to the polymer obtained in the second step at least one ethylenically unsaturated monomer, heating the resulting mixture to a temperature where cleavage of the nitroxylether bond occurs and radical polymerization starts; and polymerizing to the desired degree.

### For example the monomer of formula (I) is of formula (II)

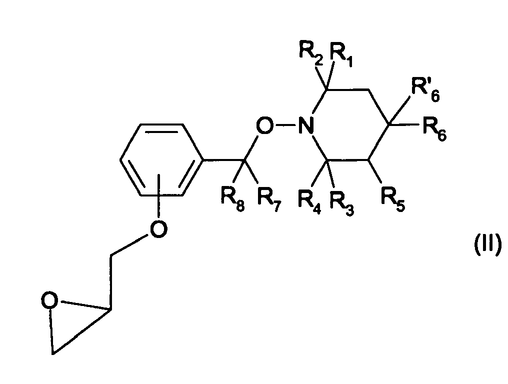

wherein
R_{1,} R₂, R₃ and R₄ are independently of each other C₁-C₄alkyl;
R₅ is hydrogen or C₁-C₄alkyl;
R'₆ is hydrogen and R₆ is H, OR₁₀, NR₁₀R₁₁, -O-C(O)-R₁₀ or NR₁₁-C(O)-R₁₀;
R₁₀ and R₁₁ independently are C₁-C₁₈alkyl, C₂-C₁₈alkenyl, C₂-C₁₈alkinyl or, if R₆ is NR₁₀R₁₁, R₁₀ and R₁₁ taken together, form a C₂-C₁₂alkylene bridge or a C₂-C₁₂-alkylene bridge interrupted by at least one O atom; or
R₆ and R'₆ together are both hydrogen, a group =O or =N-O-R₂₀ wherein
R₂₀ is straight or branched C₁-C₁₈alkyl, C₃-C₁₈alkenyl or C₃-C₁₈alkinyl, C₅-C₁₂cycloalkyl or C₅-C₁₂cydoalkenyl, phenyl, C₇-C₉phenylalkyl or naphthyl which may be unsubstituted or substituted by one or more C₁-C₈alkyl, halogen, C₁-C₈alkoxy; -C(O)-C₁-C₃₆alkyl, or Si(Me)₃; or
R₆ and R₆' are independently-O-C₁-C₁₂alkyl, -O-C₃-C₁₂alkenyl, -O-C₃-C₁₂alkinyl, -O-C₅-C₈cycloalkyl, -O-phenyl, -O-naphthyl, -O-C₇-C₉phenylalkyl; or
R₆ and R'₆ together form one of the bivalent groups -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₃)-O-, -O-CH₂-C(R₂₁)(R₂₂)-CH(R₂₃)-O-, -O-o-phenylene-O-, -O-1,2-cyclohexyliden-O-,
-O-CH₂-CH=CH-CH₂-O- or 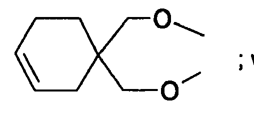 wherein
R₂₁ is hydrogen, C₁-C₁₂alkyl, COO-(C₁-C₁₂)alkyl or CH₂OR₂₄;
R₂₂ and R₂₃ are independently hydrogen, methyl or ethyl;
R₂₄ is C₁-C₁₂alkyl, benzyl or C₇-C₉phenylaklyl; and
R₇ and R₈ are independently hydrogen or C₁-C₁₈alkyl.

C₁-C₁₈alkyl can be linear or branched. Examples are methyl, ethyl, propyl, isopropyl, butyl, 2-butyl, isobutyl, t-butyl, pentyl, 2-pentyl, hexyl, heptyl, octyl, 2-ethylhexyl, t-octyl, nonyl, decyl, undecyl, dodecyl or octadecyl. Where up to C₃₆alkyl is possible, C₁-C₁₈alkyl is preferred.

Alkenyl having from 2 to 18 carbon atoms is a branched or unbranched radical, for example propenyl, 2-butenyl, 3-butenyl, isobutenyl, n-2,4-pentadienyl, 3-methyl-2-butenyl, n-2-octenyl, n-2-dodecenyl, isododecenyl.

Alkinyl having from 2 to 18 carbon atoms is a branched or unbranched radical, for example propinyl, 2-butinyl, 3-butinyl, isobutinyl, n-2,4-pentadiinyl, 3-methyl-2-butinyl, n-2-octinyl, n-2-dodecinyl, isododecinyl.

Examples of alkoxy are methoxy, ethoxy, propoxy, isopropoxy, butoxy, isobutoxy, pentoxy, isopentoxy, hexoxy, heptoxy or octoxy.

C₇-C₉phenylalkyl is for example benzyl, α-methylbenzyl, α,α-dimethylbenzyl or 2-phenylethyl, benzyl is preferred.

C₅-C₁₂cydoalkyl is for example cyclopentyl, cyclohexyl, cycloheptyl, methylcyclopentyl or cyclooctyl.

C₅-C₁₂cycloalkenyl is for example 3-cyclopentenyl, 3-cyclohexenyl or 3-cycloheptenyl.

Halogen is F, Cl, Br or I.

C₁-C₁₈alkylene is a branched or unbranched radical, for example methylene, ethylene, propylene, trimethylene, tetramethylene, pentamethylene, hexamethylene, heptamethylene, octamethylene, decamethylene or dodecamethylene.

C₂-C₁₂alkylene bridges interrupted by at least one O atom are, for example, -CH₂-O-CH₂-CH₂, -CH₂-O-CH₂-CH₂-CH₂, -CH₂-O-CH₂-CH₂-CH₂-CH₂-, -CH₂-O-CH₂-CH₂-O-CH₂-.

Preferably R₁, R₂, R₃, R₄ are methyl, or R₁ and R₃ are ethyl and R₂ and R₄ are methyl, or R₁ and R₂ are ethyl and R₃ and R₄ are methyl.

For example R₅ is hydrogen or methyl.

In particular R'₆ is hydrogen and R₆ is H, OR₁₀, NR₁₀R₁₁, -O-C(O)-R₁₀ or NR₁₁C(O)-R₁₀;
R₁₀ and R₁₁ independently are C₁-C₁₈alkyl, C₂-C₁₈alkenyl, C₂-C₁₈alkinyl or, if R₆ is NR₁₀R₁₁, R₁₀ and R₁₁ taken together, form a C₂-C₁₂alkylene bridge or a C₂-C₁₂-alkylene bridge interrupted by at least one O atom; or
R₆ and R'₆ together are both hydrogen, a group =O or =N-O-R₂₀ wherein R₂₀ is or straight or branched C₁-C₁₈alkyl.

In another specific embodiment R₆ and R'₆ together form one of the bivalent groups -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₃)-O-, - O-CH₂-C(R₂₁)(R₂₂)-CH(R₂₃)-O- and R₂₁, R₂₂ and R₂₃ have the meaning as defined above.

Specific compounds are given in Table A

**Table A**

| Compound Number | Structure |
|---|---|
| 101 | 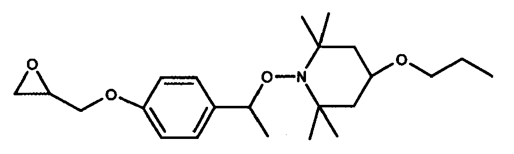 |
| 102 | 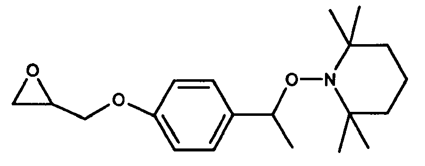 |
| 103 | 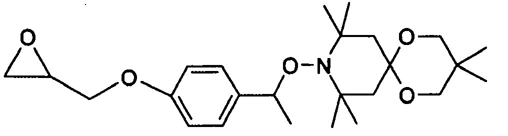 |
| 104 | 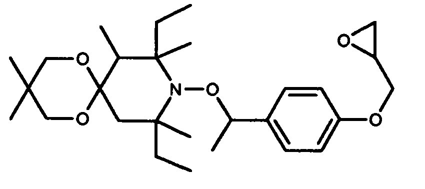 |
| 105 | 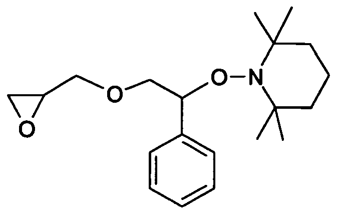 |

The compounds of formula II and in particular the compounds given in Table A are known and may be prepared as described in WO 99/46261, WO 02/48109 or US 5 721 320.

Examples of suitable other epoxy functional monomers 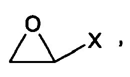 which can be used as comonomers are given in Table B.

**Table B**

| **Name** | **CAS No.** | **X** |
|---|---|---|
| Ethylene oxide | 75-21-8 | H |
| Propylene oxide | 75-56-9 | CH₃ |
| 2,3-Epoxypropyl-phenylether | 122-60-1 | CH₂-O-C₆H₅ |
| 2,3-Epoxypropyl-4-nonyl-phenylether | 6178-32-1 | CH₂-O-C₆H₅-C₉H₁₉ |
| Epichlorohydrine | 106-89-8 | -CH₂-Cl |
| 2,3-Epoxypropyl-2,2,3,3,4,4,5,5-octafluoropentylether | 19932-27-5 | CH₂-O-CH₂-(CF₂)₃CHF₂ |

For instance the epoxy group containing monomer, different from formula I is selected from the group consisting of ethylene oxide, propylene oxide, 2,3-epoxypropyl-phenylether, 2,3-epoxypropyl-4-nonyl-phenylether, epichlorohydrine and 2,3-epoxypropyl-2,2,3,3,4,4,5,5-octafluoropentylether.

These compounds are known and commercially available.

For example the molar ratio of the monomer of formula I to the sum of the other monomers is from 100:0 to 1:99, particularly 80:20 to 20:80, specifically 75:25 to 25:75.

Suitable monomers for step a2), which can be anionically polymerized are conjugated dienes, such as butadiene, styrenes, substituted styrenes and ketones, such as lactames, lactones, oxiranes or a compound of formula (la) 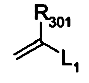 R₃₀₁ is H or C₁-C₄alkyl, L₁ is -CN or
-COOR₃₀₀ and R₃₀₀ is C₁-C₃₆ alkyl.

In particular R₃₀₁ is H and L₁ is -CN or -COOR₃₀₀ wherein R₃₀₀ is C₁-C₈alkyl.

The general polymerization procedure of step a) is well known and for example described in Encyclopedia of Polymer Science and Technology, Vol 6, 1967, 103-209.
There are principally two different processes. The first depends upon the tendency of the oxiran group to oxyalkylated active-hydrogen sites in the presence of Lewis acids or Lewis bases as catalysts. The second type of polymerization reaction involves the rapid polymerization of the oxiran group to high molecular weight polymers on a catalytic surface in a heterogeneous reaction system. Other initiation systems are described in Odian, "Principles of polymerization", Wiley-Interscience New York, 1991, pp.536 and Houben Weyl, Makromolekulare Stoffe, Bd. E20/2, Thieme Stuttgart, 1987, pp 1367. They include furthermore aluminium porphyrin compounds and certain iron and zinc complexes as catalysts.

The polymerization can be carried out in bulk or in solution, containing 10-90% (by vol.) solvent, the latter especially if gaseous monomers (propylene oxide or ethylene oxide) are used. Suitable solvents include tetrahydrofurane (THF), cyclohexane, toluene, dimethylformamide (DMF), chlorinated solvents and mixtures thereof.

Suitable Lewis bases are for example alkali metal alcoholates.

The block copolymer of step a) has for example an average weight molecular weight of M_{w} 1000 to 100 000, preferably from 1500 to 50 000.

The reaction temperature should be kept preferably as low as possible since cleavage of the nitroxylether bond depends on its chemical structure and may occur at temperatures above 100° C. The polymerization temperature should therefore not exceed 100° C. A suitable polymerization temperature is for example from -80° to 80° C, for instance from -20 to 70° C and preferably from 0° to 60° C. Polymerization is normally carried out under inert gas atmosphere at normal atmospheric pressure.

Since lower reaction temperatures are applied reaction time is usually longer, typically from 1-72 hours, in particular 1-48 hours, preferably 2-24 hours.

The isolation of the polyether backbone polymer depends on its molecular structure. Residual monomer can be removed in vacuo at temperatures not exceeding 100°C if they are liquid, extracted (for example via Soxleth extraction) or washed with appropriate solvents if they are solid.

Preferably in step b) the ethylenically unsaturated monomer or oligomer is selected from the group consisting of styrene, substituted styrene, conjugated dienes, (alkyl)acrylic esters, (meth)acrylonitriles and (alkyl)acrylamides.

In particular in step b) the ethylenically unsaturated monomers are styrene, methylacrylate, ethylacrylate, butylacrylate, isobutylacrylate, tert. butylacrylate, methyl(meth)acrylate, ethyl(meth)acrylate, butyl(meth)acrylate, acrylonitrile.

Particularly the ethylenically unsaturated monomers are isoprene, 1,3-butadiene, α-C₅-C₁₈alkene, styrene, α-methyl styrene, p-methyl styrene or a compound of formula CH₂=C(Rₐ)-(C=Z)-R_{b}, wherein Rₐ is hydrogen or C₁-C₄alkyl, R_{b} is NH₂, O⁻(Me⁺), glycidyl, unsubstituted C₁-C₁₈alkoxy, C₂-C₁₀₀alkoxy interrupted by at least one N and/or O atom, or hydroxy-substituted C₁-C₁₈alkoxy, unsubstituted C₁-C₁₈alkylamino, di(C₁-C₁₈alkyl)amino, hydroxy-substituted C₁-C₁₈alkylamino or hydroxy-substituted di(C₁-C₁₈alkyl)amino, -O-CH₂-CH₂-N(CH₃)₂ or -O-CH₂CH₂-N⁺H(CH₃)₂ An⁻;
An⁻ is a anion of a monovalent organic or inorganic acid;
Me is a monovalent metal atom or the ammonium ion.
Z is oxygen or sulfur.

### Examples for Rₐ as C₂-C₁₀₀alkoxy interrupted by at least one O atom are of formula

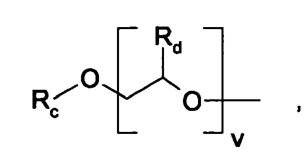

wherein R_{c} is C₁-C₂₅alkyl, phenyl or phenyl substituted by C₁-
C₁₈alkyl, R_{d} is hydrogen or methyl and v is a number from 1 to 50. These monomers are for example derived from non ionic surfactants by acrylation of the corresponding alkoxylated alcohols or phenols. The repeating units may be derived from ethylene oxide, propylene oxide or mixtures of both.

Further examples of suitable acrylate or methacrylate monomers, which can be used in step b) are given below. 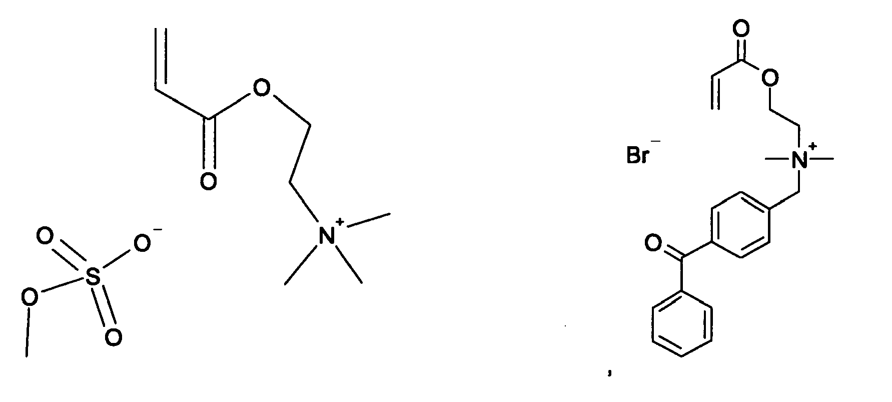 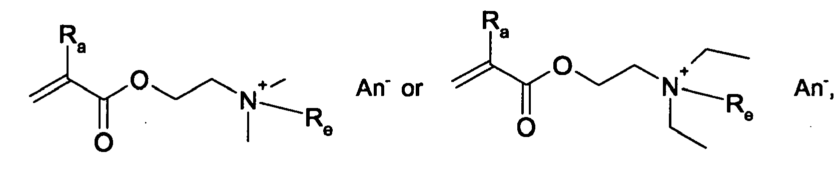 wherein An⁻
and Rₐ have the meaning as defined above and Rₑ is methyl, benzyl or benzoylbenzyl. An⁻ is preferably Cr, Br⁻ or -O₃S-O-CH₃.
Further acrylate monomers are 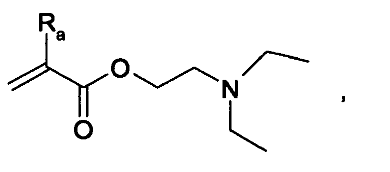 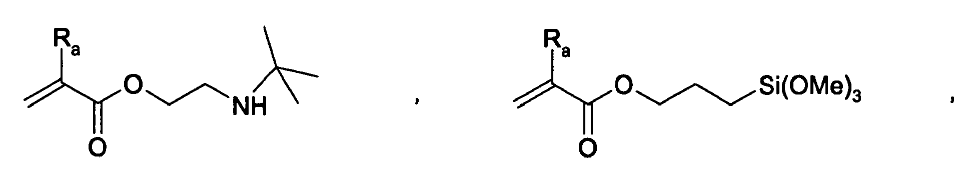 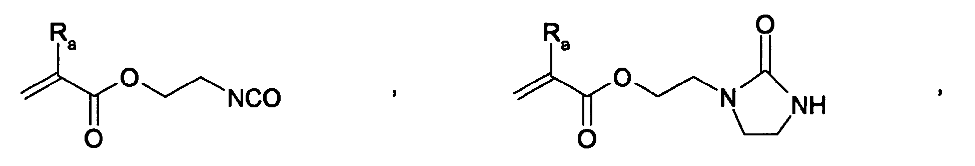 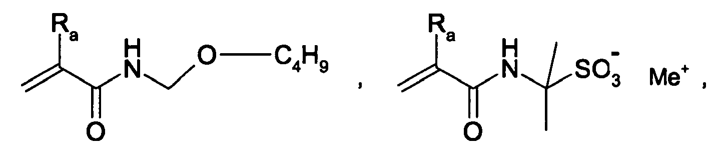 Me⁺ is an alkali metal
cation or the ammonium cation.

Examples for suitable monomers other than acrylates are

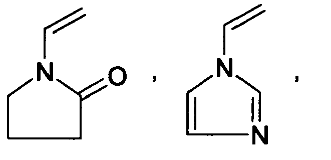

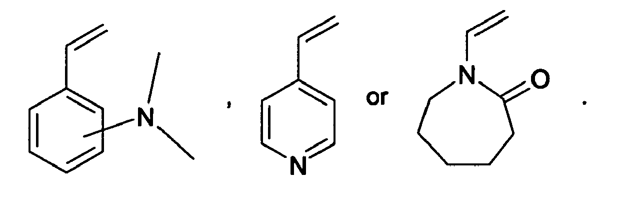

Preferably Rₐ is hydrogen or methyl, R_{b} is NH₂, gycidyl, unsubstituted or with hydroxy substituted C₁-C₄alkoxy, unsubstituted C₁-C₄alkylamino, di(C₁-C₄alkyl)amino, hydroxy-substituted C₁-C₄alkylamino or hydroxy-substituted di(C₁-C₄alkyl)amino;and Z is oxygen.

For example in step b) the weight ratio between the block copolymer prepared in step a1) and a2) and the ethylenically unsaturated monomer added in step b) is from 90:10 to 10:90.

As already mentioned the nitroxylether bond cleaves at elevated temperature and radical polymerization is initiated. Preferably in step b) the polymerization temperature is from 80° C to 160° C, in particular from 100° C to 140° C.

Typically the average weight molecular weight M_{w} is from 2000 to 300 000, preferably from 3000 bis 100 000.

The polydispersity index of the resulting comb copolymer is typically between 1.1 and 3.0.

Another aspect of the invention is a block copolymer obtainable according to step a1) and a2) of the method as described above.

The copolymer backbone has, for example, an idealized structure as given below.

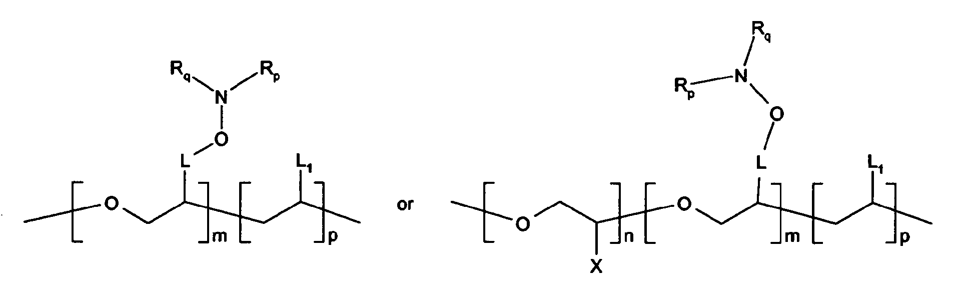

The meaning of L, Rp, Rq, L₁ and X are as given above. m, n and p are independently a number from 3 to 1000, preferably 5 to 500.

A further aspect of the invention is a comb block copolymer obtainable according to the method as defined above in steps a1), a2) and b).

Yet a further aspect of the invention is the use of a comb block copolymer obtainable according to the method as defined above in steps a1), a2) and b) as adhesive, surface modifier, surfactant or compatibilizer in thermoplastic, elastic or thermosetting polymers or as plastic material for extrusion or injection molding for shaping parts.

Definitions for the individual substituents have already been given for the method of preparation of comb block copolymers, they apply also to the other aspects of the invention.

The polymers prepared by the present invention are useful for following applications:
forming parts, extrusion or injection moldings, plastic materials for shaping parts with for example improved processibility and/or barrier properties,adhesives, detergents, dispersants, emulsifiers, surfactants, defoamers, adhesion promoters, corrosion inhibitors, viscosity improvers, lubricants, rheology modifiers, thickeners, crosslinkers, paper treatment, water treatment, electronic materials, paints, coatings, photography, ink materials, imaging materials, superabsorbants, cosmetics, hair products, preservatives, biocide materials or modifiers for asphalt, leather, textiles, ceramics and wood. Furthermore these comb copolymers can be used as self-organizing, self assembling polymer systems, e. g. for separation processes.

Both step a) and step b) are living or "quasi living" polymerizations Step a) is an anionic living polymerization and step b) a living radical polymerization.

Since the polymerization of step b) is a living radical polymerization, it can be started and stopped practically at will. Furthermore, the polymer product retains the functional alkoxyamine group allowing a continuation of the polymerization in a living matter. Thus, in one embodiment of this invention, once the first monomer is consumed in the initial radical polymerizing step a second monomer can then be added to form a second block on the growing polymer chain in a second polymerization step. Therefore it is possible to carry out additional polymerizations with the same or different monomer(s) to prepare multi-block copolymers in the comb structure.

Furthermore, since this is a living radical polymerization, blocks can be prepared in essentially any order. One is not necessarily restricted to preparing block copolymers where the sequential polymerizing steps must flow from the least stabilized polymer intermediate to the most stabilized polymer intermediate, such as is the case in ionic polymerization. Thus it is possible to prepare a multi-block copolymer in which a polyacrylonitrile or a poly(meth)-acrylate block is prepared first, then a styrene or butadiene block is attached thereto, and so on.

Random copolymers and tapered copolymer structures can be synthesized as well by using a mixture of monomers or adding a second monomer before the first one is completely consumed.

The following examples illustrate the invention.

### General remarks:

Solvents and monomers are distilled over a Vigreux column under argon atmosphere or under vacuum, shortly before being used.

To remove oxygen all polymerization reaction mixtures are flushed before polymerization with argon and evacuated under vaccum applying a freeze-thaw cycle. The reaction mixtures are then polymerized under argon atmosphere.

At the start of the polymerization reaction, all starting materials are homogeneously dissolved.

Conversion is determined by removing unreacted monomers from the polymer by precipitation in methanol and/or by drying in vacuo (0.002 torr) at least 60 minutes, weighing the remaining polymer and subtracting the weight of the initiator.

Characterization of the polymers is carried out by GPC (Gel Permeation Chromatography).

GPC: Is performed using RHEOS 4000 of FLUX INSTRUMENTS. Tetrahydrofurane (THF) is used as a solvent and is pumped at 1 ml/min. Two chromatography columns are put in series: type Plgel 5µm mixed-C of POLYMER INSTRUMENTS, Shropshire, UK. Measurements are performed at 40 °C. The columns are calibrated with low polydispersity polystyrenes having Mn from 200 to 2 000 000 Dalton. Detection is carried out using a Rl-Detector ERC-7515A of ERCATECH AG at 30 °C.

### 1. Synthesis of a blockcopolymer backbone (Polyether-b- PMMA)

The epoy-functional nitroxylether used is: 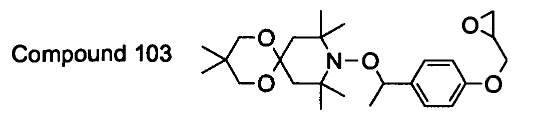 Copound 103 is prepared as described in WO 02/48109.

### Example E1 + E2:

In a dry, Argon-purged Schlenk tube equipped with a rubber septum, a magnetic stir bar and an Argon inlet, 0.505 g (0.0045 mol) potassium-tert.-butylate is dissolved in 10 ml dry toluene. 8.67 g (0.02 mol) compound 103 is dissolved in 30 ml dry toluene and added to the initiator solution. The solution is heated at 60°C for 6 h (Note: if a NOR is present, the polymerization temperature must not exceed 110°C in order to avoid NOR decomposition). After cooling down at room temperature a 5 ml sample is taken (E1). Then a solution of 11.21 g (0.108 mol) methylmethacrylate in 40 ml dry toluene is added dropwise and the mixture is stirred over night at room temperature. The reaction is stopped with 5 ml methanol and solvents are removed in vacuo. The polymer is precipitated in methanol and dried overnight in vacuo at 60°C until constant weight.
The blockcopolymer (E2) is obtained as white solid.

| Example | Conv. [%] | Mn | Mw | Mw/Mn | |
|---|---|---|---|---|---|
| E1 | 99 | 1600 | 1900 | 1.2 | polyether backbone |
| E2 | 25 | 7400 | 10800 | 1.5 | blockcopolymer backbone |

### 2. Comb copolymer formation, "grafting from" step

### Example E3:

In a Büchi miniautoclave equipped with a magnetic stir bar and an Argon-Inlet, 2.5 g of E2 are dissolved in a mixture of 32,25 g styrene/acrylonitrile (ratio 3:1). The solution is degassed by cooling down in an ice bath and then purged with Argon. The autoclave is then immersed in an oil bath and heated at 110°C for 6 hours. After cooling to room temperature, the solution is precipitated in methanol and dried at 30°C in vacuo until constant weight. The reaction product is analyzed by GPC and the comb copolymer yield (= amount of styrene/acrylonitrile monomer grafted from the blockcopolymer backbone) is determined gravimetrically.
The comb copolymer (E3) is obtained as white solid.

| Example | % styrene/acrylonitrile grafted from backbone | Mn | Mw | Mw/Mn |
|---|---|---|---|---|
| E3 | 48 | 65000 | 150000 | 2.3 |

## Claims

1. Method for the preparation of a comb block-copolymer comprising
a1) anionically polymerizing in a first step a first block of one or more epoxy group containing monomers to obtain a polyether, wherein at least one monomer is of formula (I) 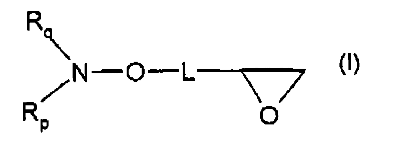 wherein L is a linking group selected from the group consisting of C₁-C₁₈alkylene, phenylene, phenylene-C₁-C₁₈alkylene, C₁-C₁₈alkylene-phenylene, C₁-C₁₈alkylene-phenyleneoxy and C₅-C₁₂cycloalkylene;
Rp and Rq are independently tertiary bound C₄-C₂₈alkyl groups which are unsubstituted or substitituted by one or more electron withdrawing groups or by phenyl; or
Rp and Rq together form a 5 or 6 membered heterocyclic ring which is substituted at least by 4 C₁-C₄alkyl groups and which may be interrupted by a further nitrogen or oxygen atom;
a2) anionically polymerizing in a second step a second block wherein the monomer is a conjugated diene, styrene, substituted styrene, ketone or a compound of formula (la) 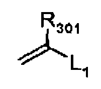 wherein R₃₀₁ is H or C₁-C₄alkyl, L₁ is CN, or -COOR₃₀₀ and R₃₀₀ is C₁-C₃₆ alkyl;
and in a third step
b) adding to the polymer obtained in the second step at least one ethylenically unsaturated monomer, heating the resulting mixture to a temperature where cleavage of the nitroxylether bond occurs and radical polymerization starts; and polymerizing to the desired degree.

2. A method according to claim 1 wherein the monomer of formula (I) is of formula (II) 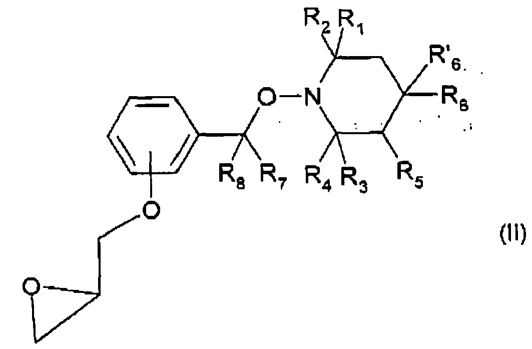 wherein
R₁, R₂, R₃ and R₄ are independently of each other C₁-C₄alkyl;
R₅ is hydrogen or C₁-C₄alkyl-,
R'₆ is hydrogen and R₆ is H, OR₁₀, NR₁₀R₁₁, -O-C(O)-R₁₀ or NR₁₁-C(O)-R₁₀;
R₁₀ and R₁₁ independently are C₁-C₁₆alkyl, C₂-C₁₈alkenyl, C₂-C₁₈alkinyl or, if R₆ is NR₁₀R₁₁ R₁₀ and R₁₁ taken together, form a C₂-C₁₂alkylene bridge or a C₂-C₁₂-alkylene bridge interrupted by at least one O atom; or
R₆ and R'₆ together are both hydrogen, a group =O or =N-O-R₂₀ wherein
R₂₀ is straight or branched C₁-C₁₆alkyl, C₃-C₁₈alkenyl or C₃-C₁₈alkinyl, C₅-C₁₂cycloalkyl or C₅-G₁₂cycloalkenyl, phenyl, C₇-C₉phenylalkyl or naphthyl which may be unsubstituted or substituted by one or more C₁-C₈alkyl, halogen, C₁-C₈alkoxy;
-C(O)-C₁-C₃₆alkyl, or Si(Me)₃; or
R₆ and R₆' are independently -Q-C₁-C₁₂alkyl, -O-C₃-C₁₂alkenyl, -O-C₃-C₁₂alkinyl, -O-C₅-C₈cycloalkyl, -O-phenyl, -O-naphthyl, -O-C₇-C₉phenylalkyl; or
R₆ and R'₆ together form one of the bivalent groups -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₂)-O-, -O-CH₂-C(R₂₁)(R₂₂)-CH(R₂₃)-O-, -O-o-phenylene-O-, -O-1,2-cyclohexyliden-O-,
-O-CH₂-CH=CH-CH₂-O- or 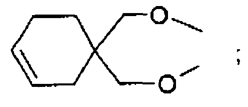 wherein
R₂₁ is hydrogen, C₁-C₁₂alkyl, COO-(C₁-C₁₂)alkyl or CH₂OR₂₄;
R₂₂ and R₂₃ are independently hydrogen, methyl or ethyl;
R₂₄ is C₁-C₁₂alkyl, benzyl or C₇-C₉phenylaklyl; and
R₇ and R₈ are independently hydrogen or C₁-C₁₆alkyl.

3. A method according to claim 2 wherein R₁, R₂, R₃, R₄ are methyl, or R₁ and R₃ are ethyl and R₂ and R₄ are methyl, or R₁ and R₂ are ethyl and R₃ and R₄ are methyl.

4. A method according to claim 2 wherein R₅ is hydrogen or methyl.

5. A method according to claim 2 wherein
R'₆ is hydrogen and R₆ is H, OR₁₀, NR₁₀R₁₁, -O-C(O)-R₁₀ or NR₁₁C(O)-R₁₀; R₁₀ and R₁₁ independently are C₁-C₁₈alkyl, C₂-C₁₈alkenyl, C₂-C₁₈alkinyl or, if R₆ is NR₁₀R₁₁, R₁₀ and R₁₁ taken together, form a C₂-C₁₂alkylene bridge or a C₂-C₁₂-alkylone bridge interrupted by at least one O atom, or
R₆ and R'₆ together are both hydrogen, a group =O or =N-O-R₂₀ wherein
R₂₀ is or straight or branched C₁-C₁₈alkyl.

6. A method according to claim 2 wherein
R₈ and R'₆ together form one of the bivalent groups -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₃)-C-, -O-CH₂-C(R₂₁)(R₂₂)-CH(RM)-O- and R₂₁, R₂₂ and R₂₃ have the meaning as defined in claim 3.

7. A method according to claim 1 wherein the epoxy group containing monomer different from formula I is selected from the group consisting of ethylene oxide, propylene oxide, 2,3-epoxypropyl-phenylether, 2,3-epoxypropyl-4-nonyl-phenylether, epichlorohydrine and 2,3-epoxypropyl-2,2,3,3,4,4,5,5-octafluoropentylether.

8. A method according to claim 1 wherein in step a) the molar ratio of the monomer of
formula 1 to the sum of the other monomers is from 100:0 to 1:99.

9. A method according to claim 1 wherein in the monomer the monomer of step a2) is selected from the group consisting of butadiene, styrenes, substituted styrenes, ketones and
a compound of formula (la) 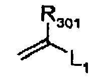 wherein R₃₀₁ is H or C₁-C₄alkyl, L₁ is -CN or -COOR₃₀₀ and R₃₀₀ is C₁-C₃₆ alkyl.

10. A method according to claim 1 wherein in step b) the ethylenically unsaturated monomer or oligomer is selected from the group consisting of styrene, substituted styrene, conjugated dienes, (alkyl)acrylic esters, (meth)acrylonitriles and (alkyl)acrylamides.

11. A method according to claim 10 wherein in step b) the ethylenically unsaturated monomers are styrene, methylacrylate, ethylacrylate, butylacrylate, isobutylacrylate, tert. butylacrylate, methyl(meth)acrylate, ethyl(meth)acrylate, butyl(meth)acrylate, acrylonitrile.

12. A method according to claim 1 wherein in step b) the weight ratio between the block copolymether prepared in step a1) and a2) and the ethylenically unsaturated monomer added in step b) is from 90:10 to 10:90.

13. A method according to claim 1 wherein in step b) the polymerization temperature is from 80° C to 160° C.

14. A block copolymer obtainable according to step a1) and a2) of the method of claim 1.

15. A comb block copolymer obtainable according to the method of claim 1.

16. Use of a comb block copolymer obtainable according to the method of claim 1 as adhesive, surface modifier, surfactant or compatibilizer in thermoplastic, elastic or thermosetting polymers or as plastic material for extrusion or injection molding for shaping parts.

## Patentansprüche

1. Verfahren zur Herstellung von einem Kamm-Block-Copolymer, umfassend
a1) anionisches Polymerisieren in einem ersten Schritt eines ersten Blocks von eine oder mehrere Epoxy-Gruppen enthaltenden Monomeren, um einen Polyether zu erhalten, wobei mindestens ein Monomer die Formel (I) 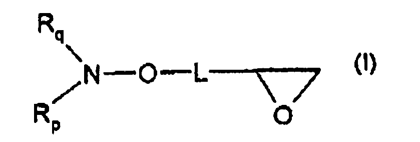 aufweist, worin L eine verbindende Gruppe, ausgewählt aus der Gruppe, bestehend aus C₁-C₁₈-Alkylen, Phenylen, Phenylen-C₁-C₁₈-alkylen, C₁-C₁₈-Alkylen-phenylen, C₁-C₁₈-Alkylen-phenylen-oxy und C₅-C₁₂-Cycloalkylen, darstellt; Rp und Rq unabhängig tertiär gebundene C₄-C₂₈-Alkyl-Gruppen darstellen, die unsubstituiert oder mit einer oder mehreren Elektronen anziehenden Gruppen oder mit Phenyl substituiert sind; oder Rp und Rq zusammen einen 5 oder 6 gliedrigen heterocyclischen Ring bilden, der mit mindestens 4 C₁-C₄-Alkyl-Gruppen substituiert ist und der durch ein weiteres Stickstoff- oder Sauerstoff-Atom unterbrochen sein kann;
a2) anionisches Polymerisieren in einem zweiten Schritt von einem zweiten Block, worin das Monomer ein konjugiertes Dien, Styrol, substituiertes Styrol, Keton oder eine
Verbindung der Formel (Ia) 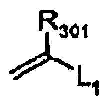 darstellt, worin R₃₀₁ H
oder C₁-C₄-Alkyl darstellt, L₁ CN, oder -COOR₃₀₀ darstellt und R₃₀₀ C₁-C₃₆-Alkyl darstellt;
und in einem dritten Schritt
b) Zugeben zu dem Polymer, das in dem zweiten Schritt erhalten wurde, von mindestens einem ethylenisch ungesättigten Monomer, Erhitzen des erhaltenen Gemisches auf eine Temperatur, bei der die Spaltung der Nitroxylether-Bindung stattfindet und radikalische Polymerisation beginnt; und Polymerisieren zu dem gewünschten Grad.

2. Verfahren nach Anspruch 1, wobei das Monomer der Formel (I) die Formel (II) 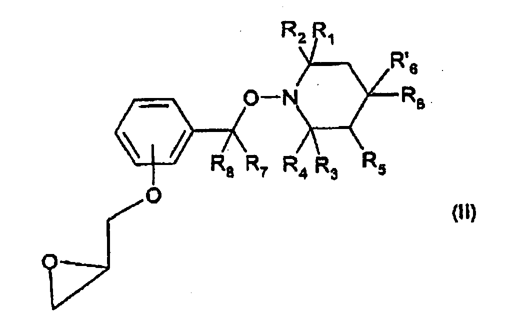 aufweist, worin
R₁, R₂, R₃ und R₄ unabhängig voneinander C₁-C₄-Alkyl darstellen;
R₅ Wasserstoff oder C₁-C₄-Alkyl darstellt;
R'₆ Wasserstoff darstellt und R₆ H, OR₁₀, NR₁₀R₁₁, -O-C(O)-R₁₀ oder NR₁₁-C(O)-R₁₀ darstellt;
R₁₀ und R₁₁ unabhängig C₁-C₁₈-Alkyl, C₂-C₁₈-Alkenyl, C₂-C₁₈-Alkinyl darstellen oder, wenn R₆ NR₁₀R₁₁ darstellt, R₁₀ und R₁₁ zusammen genommen, eine C₂-C₁₂-Alkylen-Brücke oder eine C₂-C₁₂-Alkylen-Brücke, unterbrochen durch mindestens ein O-Atom, bilden; oder
R₆ und R'₆ zusammen beide Wasserstoff, eine Gruppe =O oder =N-O-R₂₀ darstellen, worin
R₂₀ gerad-kettiges oder verzweigtes C₁-C₁₈-Alkyl, C₃-C₁₈-Alkenyl oder C₃-C₁₈-Alkinyl, C₅-C₁₂-Cycloalkyl oder C₅-C₁₂-Cycloalkenyl, Phenyl, C₇-C₉-Phenylalkyl oder Naphthyl darstellt, das unsubstituiert oder substituiert sein kann mit einem oder mehreren C₁-C₈-Alkyl, Halogen, C₁-C₈-Alkoxy;
-C(O)-C₁-C₃₆-Alkyl, oder Si(Me)₃; oder R₆ und R₆' unabhängig -O-C₁-C₁₂-Alkyl -O-C₃-C₁₂-Alkenyl, -O-C₃-C₁₂-Alkinyl, -O-C₅-C₈-Cycloalkyl, -O-phenyl, -O-Naphthyl, -O-C₇-C₉-Phenylalkyl darstellen; oder
R₆ und R'₆ zusammen eine der zweiwertigen Gruppen -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₃)-O-, -O-CH₂-C(R₂₁)(R₂₂)-CH(R₂₃)-O-, -O-o-Phenylen-O-, -O-1,2-Cyclohexyliden-O-, -O-CH₂-CH=CH-CH₂-O-
oder 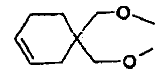 bilden; worin
R₂₁ Wasserstoff, C₁-C₁₂-Alkyl, COO-(C₁-C₁₂)-Alkyl oder CH₂OR₂₄ darstellt;
R₂₂ und R₂₃ unabhängig Wasserstoff, Methyl oder Ethyl darstellen;
R₂₄ C₁-C₁₂-Alkyl, Benzyl oder C₇-C₉-Phenylalkyl darstellt; und R₇ und R₈ unabhängig Wasserstoff oder C₁-C₁₈-Alkyl darstellen.

3. Verfahren nach Anspruch 2, worin R₁, R₂, R₃, R₄ Methyl darstellen, oder R₁ und R₃ Ethyl darstellen und R₂ und R₄ Methyl darstellen, oder R₁ und R₂ Ethyl darstellen und R₃ und R₄ Methyl darstellen.

4. Verfahren nach Anspruch 2, worin R₅ Wasserstoff oder Methyl darstellt.

5. Verfahren nach Anspruch 2, worin
R'₆ Wasserstoff darstellt und R₆ H, OR₁₀, NR₁₀R₁₁, -O-C(O)-R₁₀ oder NR₁₁-C(O)-R₁₀ darstellt;
R₁₀ und R₁₁ unabhängig C₁-C₁₈-Alkyl, C₁-C₁₈-Alkenyl, C₂-C₁₈-Alkinyl darstellen oder, wenn R₆ NR₁₀R₁₁ darstellt,
R₁₀ und R₁₁ zusammen genommen, eine C₂-C₁₂-Alkylen-Brücke oder eine C₂-C₁₂-Alkylen-Brücke, unterbrochen durch mindestens ein O-Atom, bilden; oder
R₆ und R'₆ zusammen beide Wasserstoff, eine Gruppe =O oder =N-O-R₂₀ darstellen, worin R₂₀ gerad-kettiges oder verzweigtes C₁-C₁₈-Alkyl darstellt.

6. Verfahren nach Anspruch 2, worin
R₆ und R'₆ zusammen eine von den zweiwertigen Gruppen -O-C(R₂₁)(R₂₂)-CH(R₂₃)-_{C}-, -O-CH(R₂₁)-CH₂₂C(R₂₂)(R₂₃)-O-, -O-CH(R₂₂)-CH₂-C(R₂₁)(R₂₃)-O-, -O-CH₂C(R₂₁)(R₂₂)-CH(R₂₃)-O- bilden und R₂₁, R₂₂ und R₂₃ die wie in Anspruch 3 definierte Bedeutung aufweisen.

7. Verfahren nach Anspruch 1, wobei das Epoxy-Gruppe enthaltende Monomer, das von Formel I verschieden ist, ausgewählt ist aus der Gruppe, bestehend aus Ethylenoxid, Propylenoxid, 2,3-Epoxypropyl-phenylether, 2, 3-Epoxypropyl-4-nonyl-phenylether, Epichlorhydrin und 2,3-Epoxypropyl-2, 2, 3, 3, 4, 4, 5, 5-octafluor-pentylether.

8. Verfahren nach Anspruch 1, wobei in Schritt a) das Molverhältnis von dem Monomer der Formel I zu der Summe der anderen Monomere von 100 : 0 bis 1 : 99 ist.

9. Verfahren nach Anspruch 1, wobei in dem Monomer das Monomer von Schritt a2) ausgewählt ist aus der Gruppe, bestehend aus Butadien, Styrolen, substituierten Styrolen, Ketonen und einer Verbindung der Formel (Ia) 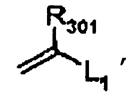 worin
R₃₀₁ H oder C₁-C₄-Alkyl darstellt, L₁ -CN oder -COOR₃₀₀ darstellt und R₃₀₀ C₁-C₃₆-Alkyl darstellt.

10. Verfahren nach Anspruch 1, wobei in Schritt b) das ethylenisch ungesättigte Monomer oder Oligomer ausgewählt ist aus der Gruppe, bestehend aus Styrol, substituiertem Styrol, konjugierten Dienen, (Alkyl)acrylsäureestern, (Meth)-acrylnitrilen und (Alkyl)acrylamiden.

11. Verfahren nach Anspruch 10, wobei in Schritt b) die ethylenisch ungesättigten Monomere Styrol, Methylacrylat, Ethylacrylat, Butylacrylat, Isobutylacrylat, tert.-Butylacrylat, Methyl-(meth)acrylat, Ethyl-(meth)acrylat, Butyl-(meth)acrylat, Acrylnitril darstellen.

12. Verfahren nach Anspruch 1, wobei in Schritt b) das Gewichtsverhältnis zwischen dem Block-Copolyether, hergestellt in Schritt a1 und a2), und dem in Schritt b) zugegebenen ethylenisch ungesättigten Monomer von 90 : 10 bis 10 : 90 ist.

13. Verfahren nach Anspruch 1, wobei in Schritt b) die Polymerisations-Temperatur von 80°C bis 160°C ist.

14. Block-Copolymer, erhältlich gemäß Schritt a1) und a2) gemäß dem Verfahren nach Anspruch 1.

15. Kamm-Block-Copolymer, erhältlich gemäß dem Verfahren nach Anspruch 1.

16. Verwendung von einem Kamm-Block-Copolymer, erhältlich gemäß dem Verfahren nach Anspruch 1 als Klebstoff, Oberflächen-Modifizierungsmittel, Tensid oder Kompatibilisator in thermoplastischen, elastischen oder wärmehärtenden Polymeren oder als Kunststoff-Material zum Extrusions- oder Spritzgieß-Formen für Form-Teile.

## Revendications

1. Procédé pour la préparation d'un copolymère séquencé peigne, comprenant :
a1) la polymérisation anionique dans une première étape d'un premier bloc d'un
ou plusieurs groupe(s) époxy contenant des monomères afin d'obtenir un polyéther, dans lequel au moins un monomère est de formule (I) 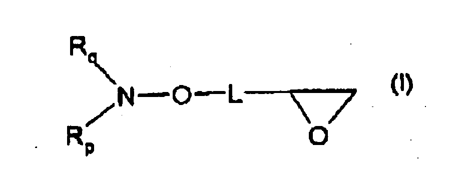 dans laquelle L est un groupe de liaison choisi dans le groupe constitué d'alcylène en C₁-C₁₈, de phénylène, de phénylène-alcylène en C₁-C₁₈, d'alcylène en C₁-C₁₈-phénylène, d'alcylène en C₁-C₁₈-phénylène-oxy et de cycloalcylène en C₅-C₁₂,
Rp et Rq sont indépendamment des groupes alkyle en C₄-C₂₈ avec des liaisons tertiaires qui sont non-substitués ou substitués par un ou plusieurs groupes de retrait d'électron ou par un phényle ; ou
Rp et Rq forment ensemble un cycle hétérocyclique à 5 ou 6 éléments, qui est substitué au moins par 4 groupes alkyle en C₁-C₄, et qui peut être interrompu par un autre atome d'azote ou d'oxygène ;
a2) la polymérisation anionique dans une seconde étape d'un second bloc dans laquelle le monomère est un diène combiné, un styrène, un styrène substitué, une cétone
ou un composé de formule (Ia) 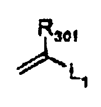 où R₃₀₁ est un H ou un alkyle en C₁₋₄, L₁ est un CN ou -COOR₃₀₀ et R₃₀₀ est un alkyle en C₁-C₃₆ ; et dans une troisième étape :
b) l'addition au polymère obtenu dans la seconde étape d'au moins un monomère éthyléniquement insaturé, en chauffant le mélange obtenu à une température où le clivage de la liaison de nitroxyléther survient et la polymérisation radicale démarre,
et la polymérisation au degré souhaité.

2. Procédé selon la revendication 1, dans lequel le monomère de formule (I) est de formule (II) 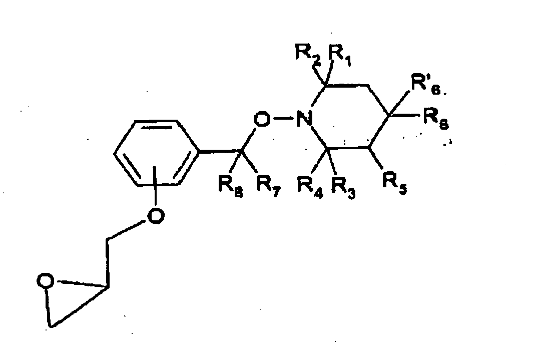 dans laquelle
R₁, R₂, R₃ et R₄ sont indépendamment l'un de l'autre un alkyle en C₁₋₄ ;
R₅ est un hydrogène un alkyle en C₁-C₄ ;
R'₆ est un hydrogène et R₆ est un H, OR₁₀, NR₁₀R₁₁, -O-C(O)-R₁₀ ou NR₁₁-C(O)-R₁₀ ;
R₁₀ et R₁₁ sont indépendamment un alkyle en C₁-C₁₈, un alcényle en C₂-C₁₈, un alcinyle en C₂-C₁₈ OU, si R₆ est un NR₁₀R₁₁, R₁₀ et R₁₁ pris ensemble, forment un pont d'alcylène en C₂-C₁₂ ou un pont d'alcylène en C₂-C₁₂ interrompu par au moins un atome d'O ; ou
R₆ et R'₆ ensemble sont tous deux de l'hydrogène, un groupe =O ou =N-O-R₂₀ dans lequel
R₂₀ est un alkyle en C₁-C₈ droit ou ramifié, un alcényle en C₃-C₁₈ ou un alcinyle en C₃-C₁₈, un cycloalkyle en C₅-C₁₂ ou un cycloalcényle en C₅-C₁₂, un phényle, un phénylalkyle en C₇-C₈, ou naphtyle qui peut être non-substitué ou substitué par un ou plusieurs alkyle en C₁-C₈, halogène, alcoxy en C₁-C₈ ;
-C(O)-alkyle en C₁-C₃₆, ou Si(Me)₃, ou
R₆ et R'₆ sont indépendamment un -O-alkyle en C₁-C₁₂, un O-alcényle en C₃-C₁₂, -O-alcinyle en C₃-C₁₂, un -O-cycloalkyle en C₅-C₈, -O-phényle, -O-naphtyle, -O-phénylalkyle en C₇-C₈ ; ou
R₆ et R'₆ ensemble forment un des groupes bivalents -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₃)-O-, -O-CH₂-C(R₂₁)(R₂₂)-CH(R₂₃)-O-, -O-o-phénylène-O-, -O- 1,2-cyclohexylidèn-O-,
-O-CH₂-CH=CH-CH₂-O ou 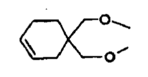 dans laquelle
R₂₁ est un hydrogène, un alkyle en C₁-C_{12 ;} un COO-alkyle en (C₁-C₁₂) ou CH₂OR₂₄,
R₂₂ et R₂₃ sont indépendamment de l'hydrogène, du méthyle ou de l'éthyle ;
R₂₄ est un alkyle en C₁-C₁₂, un benzyle ou phénylalkyle en C₇-C₉ et
R₇ et R₈ sont indépendamment de l'hydrogène ou un alkyle en C₁-C₁₈.

3. Procédé selon la revendication 2, dans lequel R₁, R₂, R₃, R₄ sont un méthyle
ou R₁ et R₃ sont un éthyle et R₂ et R₄ sont un méthyle, ou R₁ et R₂ sont un éthyle et R₃ et R₄ sont un méthyle.

4. Procédé selon la revendication 2, dans lequel R₅ est un hydrogène ou un méthyle.

5. Procédé selon la revendication 2, dans lequel
R'₆ est un hydrogène et R₆ est un H, OR₁₀, NR₁₀R₁₁, -O-C(O)-R₁₀ ou NR₁₁-C(O)-R₁₀ ;
R₁₀ et R₁₁ sont indépendamment un alkyle en C₁-C₁₈, un alcényle en C₂-C₁₈, un alcinyle en C₂-C₁₈ ou, si R₆ est un NR₁₀R_{11 ;} R₁₀ et R₁₁ pris ensemble, forment un pont alcylène en C₂-C₁₂ ou un pont alcylène en C₂-C₁₂ interrompu par au moins un atome d'O ; ou
R₆ et R'₆ ensemble sont tous deux un hydrogène, un groupe =O ou =N-O-R₂₀ dans lequel
R₂₀ est un alkyle en C₁-C₁₈ droit ou ramifié.

6. Procédé selon la revendication 2, dans lequel
R₆ et R'₆ ensemble forment un des groupes bivalents -O-C(R₂₁)(R₂₂)-CH(R₂₃)-O-, -O-CH(R₂₁)-CH₂₂-C(R₂₂)(R₂₃)-O-, -O-CH(R₂₂)-CH₂-C(R₂₁)(R₂₃)-O-, -O-CH₂-C(R₂₁)(R₂₂)-CH(R₂₃)-O-, et R₂₁, R₂₂ et R₂₃ ont la signification définie dans la revendication 3.

7. Procédé selon la revendication 1, dans lequel le groupe époxy contenant un monomère différent de la formule I est choisi dans le groupe constitué d'oxyde d'éthylène, d'oxyde de propylène, de 2,3-époxypropyl-phényléther, de 2,3- époxypropyl-4-nonyl-phényléther, d'épichlorhydrine, de 2,3-époxypropyl-2,2,3,3,4,4,5,5-octafluoropentyléther.

8. Procédé selon la revendication 1, dans lequel dans l'étape a), le rapport molaire du monomère de formule I sur la somme des autres monomères est de 100 : 0 à 1 : 99.

9. Procédé selon la revendication 1, dans lequel, dans le monomère, le monomère de l'étape a2) est choisi dans le groupe constitué de butadiène, styrènes, styrènes substitués, cétones et un composé de formule (Ia) 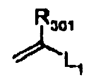 où R₃₀₁ est un H ou un alkyle en C₁₋₄, L₁ est un CN ou -COOR₃₀₀ et R₃₀₀ est un alkyle en C₁-C₃₆.

10. Procédé selon la revendication 1, dans lequel, dans l'étape b), le monomère
ou oligomère éthyléniquement insaturé est choisi dans le groupe constitué de styrène, de styrène substitué, de diènes combinés, d'esters d'(alkyl)acryliques, de (méth)acrylonitriles, et d'(alkyl)acrylamides.

11. Procédé selon la revendication 10 dans lequel dans l'étape b), les monomères éthyléniquement insaturés sont un styrène, un méthacrylate, un éthylacrylate, un butylacrylate, un isobutylacrylate, un tert-butylacrylate, un méthyl(méth)acrylate, un éthyl(méth)acrylate, un butyl(méth)acrylate, un acrylonitrile.

12. Procédé selon la revendication 1, dans lequel dans l'étape b), le rapport en poids entre le copolymère séquencé préparé dans l'étape a1) et a2) et le monomère éthyléniquement insaturé ajouté dans l'étape b) est compris entre 90 : 10 et 10 : 90.

13. Procédé selon la revendication 1, dans lequel, dans l'étape b), la température de polymérisation est comprise entre 80 °C et 160 °C.

14. Copolymère séquencé pouvant être obtenu selon l'étape a1) et a2) du procédé de la revendication 1.

15. Copolymère séquencé en peigne pouvant être obtenu selon le procédé de la revendication 1.

16. Utilisation d'un copolymère séquencé peigne pouvant être obtenu selon le procédé de la revendication 1, comme adhésif, modificateur de surface, tensioactif ou agent compatibilisant dans des polymères thermoplastiques, élastiques ou thermodurcissables ou sous forme de matière plastique pour un moulage par extrusion ou injection pour façonner des pièces.
